# EUROPEAN PATENT SPECIFICATION

(11) **EP 1 869 968 B1**
(45) Date of publication and mention of the grant of the patent: **18.11.2009**
(21) Application number: 07075486.6
(22) Date of filing: 19.06.2007
(51) Int. Cl.: A01D 87/10

(54) **Crop-processing device comprising a pick-up/cutting device**
Vorrichtung zur Saatgutverarbeitung mit Aufnahme-/Schneidegerät
Dispositif de traitement des récoltes comportant un dispositif de ramassage/coupe

(30) Priority: 22.06.2006 NL 1032041; 20.12.2006 NL 1033094; 16.05.2007 NL 1033854; 24.05.2007 NL 1033882
(43) Date of publication of application: 26.12.2007
(73) Proprietor: Maasland N.V., 3147 PA Maassluis (NL)
(72) Inventor: De Vries, Sjoerd Sieger, 9074 MC Hallum (NL); Havermans, Cornelis Christianus Franciscus, 4761 WX Zevenbergen (NL)
(74) Representative: Corten, Maurice Jean F.M.

(56) References cited:
- EP-A- 0 492 273
- EP-A1- 1 380 204
- DE-A1- 3 727 156
- DE-C- 967 399
- DE-C1- 3 820 703
- DE-U1-202004 018 359
- GB-A- 2 140 285
- US-A- 5 190 140

## Description

The present invention relates to a crop-processing device provided with a pick-up/cutting device for picking up and cutting an agricultural product.

In particular, the invention relates to a crop-processing device according to the preamble of claim 1.

Devices of this type are known e.g. from EP-A-0 492 273. One drawback of the known devices relates to the efficiency with which the cut product is discharged. Often, the product has to be discharged to a certain height and has to gain a certain speed so that it can be transferred to a transport trailer or the like in an evenly distributed manner. However, the efficiency of the known devices is relatively low and it is often the case that a large amount of power is required in order to ensure that the discharge keeps up with the pick-up/cutting device. In many cases, vehicles with a power of several hundreds of kW are required, thus resulting in a high fuel consumption with this method. In addition, such vehicles are often very heavy and can thus not be used on any desired terrain and under all weather conditions.

It is an object of the invention to provide a crop-processing device, in which in particular the discharge of cut crop is carried out in a more efficient manner. Thus, the processing device requires less supplied power with the same processing capacity. In other words, using an engine having the same power, it is possible to process more crop per unit time.

This object is achieved by the invention with a crop-processing device according to claim 1, which is characterized in that a peripheral speed of the second accelerating element is greater than a peripheral speed of the first accelerating element. The crop-processing device provided in this manner was found to have a relatively high efficiency, probably because the discharge is carried out in stages. As a result thereof, the accelerating element does not have to accelerate the crop in one go from the normal speed used during cutting, usually hardly faster than the driving speed of a few metres per second, to a desired ejection speed, which, after all, will easily, but not exclusively, be approximately 50 metres per second.

In one embodiment, the peripheral speed of the first accelerating element is between 5 and 25 m/s. Such a peripheral speed for the first accelerating element was found to provide an advantageous first stage, in which, for example, the grip on the product is good, so that few blockages occur and the discharge takes place in a uniform fashion.

In one embodiment, the peripheral speed of the second accelerating element is between 10 and 50 m/s. This value for the peripheral speed was found to take the crop to be supplied to the second accelerating element to a desired ejection speed in an efficient manner. This applies in particular for a device in which the first accelerating element has a peripheral speed which is in the range indicated above.

In particular, the diameter of the first accelerating element is at least 400 mm, preferably at least 450 mm. It was found that with these minimum dimensions for the first (accelerating) element, an excellent discharge can be achieved. Particularly the risk of the crop being wound around the accelerating element in an undesirable manner was found to be sufficiently low. On the other hand, it is advantageous not to make the first accelerating element too large. It was found to be advantageous to adhere to a maximum diameter of around 600 mm and advantageously of approximately 550 mm. With such values, the periphery of the first accelerating element is sufficiently close to the periphery, or discharge, of the cutting unit, so that an efficient discharge is ensured.

Advantageously, the diameter of the second accelerating element is between 400 and 800 mm, preferably between 450 and 700 mm. These were found to be favourable values as regards efficiency. In general, the second accelerating element can have a slightly larger diameter than the first, since the transfer of the crop by the second accelerating element is simpler due to the higher crop speed downstream of the first accelerating element compared to the speed at which the crop is presented by the cutting unit.

In particular, the first and the second accelerating element are rotatable about respective parallel shafts. This greatly facilitates the transfer of the crop from the first to the second accelerating element. However, it is also possible for the second accelerating element to rotate about a different shaft.

The respective shafts are preferably at right angles to an intended advancement direction of the crop-processing device. As the pick-up/cutting unit usually has a body rotating about a similar shaft, further processing is simple if the elements which follow do the same. However, it is also possible that at least the second accelerating element can rotate about a shaft which is parallel to the advancement direction. This could be particularly advantageous if the processed crop is ejected to the side, although a completely parallel configuration may offer advantages if this is the case.

In one embodiment, the discharge duct is narrower at the second accelerating element than at the first accelerating element. Advantageously, the accelerating elements are correspondingly narrower. It was found to be advantageous with regard to the discharge efficiency not only to increase the (peripheral) speed, but also to reduce the diameter of the discharge duct.

In particular, at least the first and the second accelerating element each comprise a cylindrical body with projections. Such an embodiment provides a good grip on the pieces of the crop. However, it is also possible, for example, to use a cylinder made of a material which has a large amount of friction, such as rubber rollers.

Advantageously, the projections are at least 2 cm, preferably at least 5 cm long, that is to say the projections protrude at least 2, respectively at least 5 cm, above their immediate surroundings with their tops. It is also possible for their surroundings to be recessed at least 2 or 5 cm, respectively. It was found that at such a minimum height, the grip is such that crop may become slightly lodged between the projections, which not only results in high grip, but also leads to a kind of buffer action. In the process, a slight accumulation of crop may occur due to it creeping up the projections and piling up.

In this case, the projections could comprise, for example, a front facing in the respective direction of rotation, a section of which, which is at least 2 cm long viewed from one end, is at an angle to a normal on the accelerating element of at most 45°. This results in good grip and good "creep behaviour".

It should be noted that the dimensions given above for the diameter relate to the total diameter, i.e. including the height of any projections. It was found to have relatively little effect whether an accelerating element having a total diameter of 450 mm is made up of, for example, a roller with a diameter of 400 mm and projections of 25 mm, or a roller of 250 mm and projections of 100 mm.

In particular, the projections of the second accelerating element have a larger mean width than the mean width of the projections of the first accelerating element. This measure was found to have a favourable impact on the efficiency. It is assumed that the larger width results in a stronger air current, which is advantageous for transfer and further acceleration/conveying, which has just been achieved downstream of the first accelerating element. However, this measure is not compulsory, and a second accelerating element which is at least substantially identical to the first is also advantageous, in particular at different peripheral speeds.

In one embodiment, the width of the projections of the first accelerating element is between 2 and 30 mm. Furthermore, the width of the projections of the second accelerating element is advantageously between 100 and 400 mm, preferably between 250 and 300 mm. It was found that such widths make the device very efficient. At such widths, the projections of the first accelerating element can be referred to as teeth or fingers, and those of the second accelerating element as vanes, which also ensure a more constant discharge. Here, the width should in each case be measured parallel to the axis of rotation of the respective accelerating element. In this case, the "depth" of the projections, i.e. the dimension perpendicular to the axis of rotation and to the length, can be greater than the width, for example in order to impart strength to the projections.

In a particular embodiment, neighbouring projections are arranged on the first accelerating element, staggered in the peripheral direction, advantageously in at least one spiral. This was found to be favourable for a uniform discharge, without a great risk of impact loads. Advantageously, there are several spirals, or there is a single spiral comprising at least five windings wound around the accelerating element.

Advantageously, at least 80 projections per metre are arranged over the width of the first accelerating element, advantageously at least 80 projections per metre over the width for each spiral. These numbers were found to result in a satisfactory uniform discharge. In practice, at least 100, preferably at least 100 per metre per spiral, is highly advantageous. All this depends on the width of the projections as with narrower projections a higher density is possible.

In particular, the device according to the invention comprises an engine with a maximum engine power of less than 150 kW, more particularly less than 125 kW. Such an engine is sufficient for the device according to the invention, even at normal processing widths of, for example, 1.5 metres, at a speed of up to preferably 8-10 km/h. Of course, the device may also be provided without an engine, in which case the device is then designed to be coupled to a tractor vehicle, preferably having a similar maximum engine power. In addition, it is of course also possible to provide the device with a more powerful engine, such as for example of more than 200 kW, and/or to couple it to a tractor device having such a more powerful engine. This may be advantageous, for example, if such a vehicle is already available, or in order to increase the crop-processing capacity, preferably up to processing widths of 2 m and speeds of over 10 km/h. It is nevertheless a great advantage that much less engine power is now required for a common or average capacity. Obviously, this also has a positive effect on the costs of the entire device, and on fuel consumption, etc.

In an advantageous embodiment, an angle of contact between the cut agricultural product and the first accelerating element is between 45 and 100°, preferably between 60 and 90°. This angle is the angle at which the crop is accelerated within the device by the first accelerating element. The selected angles are advantageous for their accelerating effect, without too much risk of the crop winding itself around the accelerating element in an undesirable manner.

In an advantageous embodiment, an angle of contact between the cut agricultural product and the second accelerating element is between 5 and 45°, preferably between 5 and 30°. The angles given above for the second accelerating element are based on similar considerations as those for the angle for the first accelerating element. These are generally smaller, as it is assumed that it is sufficient in this case to give the crop only an accelerating "nudge", without requiring a long path. Furthermore, the air current generated by the second accelerating element was found to improve the effectiveness of a small angle of contact. In particular, the contact between the cut agricultural product and the second accelerating element is substantially tangential.

In another advantageous embodiment, the angles of contact between the cut agricultural product and the first accelerating element and the second accelerating element are substantially equal, i.e. they differ by at most 10°. For example, product is supplied at an angle of approximately 30° to the horizontal plane. The angles of contact between the cut agricultural product and the first and second accelerating element, respectively, are in that case preferably both approximately 30°. Tests have shown that a very uniform product flow is also possible with this configuration.

The cutting device advantageously comprises at least one fixed knife and at least one, in particular rotating, knife which is movable with respect to and is in contact with the at least one fixed knife. Preferably, the fixed knife comprises several fixed knives which are arranged parallel to one another, and the rotating knife comprises several rotating knives which are connected to one another and arranged parallel to one another, which can at least partly move between the fixed knives. In this case, the crop is neatly cut into pieces, for example into pieces having a length of a few centimetres. The cutting device is in particular not a cylinder chopper. This cutting device, as well as the pick-up device and the conveying device (accelerating elements and the like) are all designed for processing the intended crop, such as grass or hay. To this end, the pick-up device for example comprises a toothed roller, etc.

Advantageously, the pick-up/cutting device is only provided with the pick-up unit and the cutting unit. This means that this device does not comprise a compacting device. Such a compacting device usually requires a large amount of power.

The agricultural product may be of a general nature. In particular, the agricultural product comprises elongate stalks, more particularly grass or hay. Alternatively, it is also possible to choose crops such as maize.

In one advantageous embodiment, a collecting container is provided between the cutting device and the discharge device for collecting the cut agricultural product, which collecting container is provided with means for conveying the cut agricultural product to the discharge device. Such a collecting container or buffer store is advantageous in order to achieve a uniform trouble-free discharge of product.

In an advantageous embodiment, the discharge duct is curved, and at least the surface of the internal walls of at least the curved parts of the discharge duct has a low coefficient of friction in order to assist conveyance of the cut agricultural product through the discharge duct. This may, for example, be achieved by coating the internal walls with a material having a low coefficient of friction, such as Teflon® or other materials which are known per se, including certain kinds of plastic, or by manufacturing the walls of the discharge duct from such materials.

In one embodiment, the discharge duct comprises angle-adjustment means for adjusting the discharge angle of the product. The angle-adjustment means may in this case comprise adjustment means for adjusting a horizontal and/or a vertical angle. Thus, it is possible, for example, to adjust the distance over which the product is ejected and/or the position where it lands.

In a particular embodiment, the device comprises a collecting tray, which is designed for collecting product delivered out of the discharge duct. As the device according to the invention is able to provide a very uniform product discharge, it will be possible to load the collecting tray in a very uniform manner as well. In particular when the angle-adjustment means are being used as well, the collecting tray can also be filled completely. Advantageously, the tray is detachable, for example replaceable.

Advantageously, the device comprises product-compressing means which are designed for compressing the product that is in the collecting tray. In this manner, the amount of product that is collected in the collecting tray can be increased, without the collecting tray having to be made too high (total height of device for example less than 4 metres) or otherwise too large. In addition, the product does not have to be compressed by the pick-up/cutting unit, so that the latter not only requires less power, but also the cutting quality is higher and more consistent. The cutting rotor or the like may, for example, be of a lighter design.

The product-compressing means may, for example and advantageously, comprise a displaceable wall, advantageously a hydraulic roof and/or a hydraulic side wall of the collecting tray. This side wall or this roof, respectively, can be moved sideways or downwards, respectively, by hydraulic means while simultaneously compressing the product. If desired, this can be carried out several times while the collecting tray is being filled. A further advantage of providing a displaceable side wall is the fact that it can also push the contents out of the collecting tray in order to unload the latter. Advantageously, an opposite wall is in this case designed to be displaceable, such as liftable or tiltable.

Advantageously, the device comprises a first housing surrounding the discharge device, preferably in addition a second housing joined to this first housing surrounding the pick-up/cutting device. Preferably, the first housing is closed as far as possible. Thus, as little as possible fresh air is sucked in and the risk of undesirable ejection of product is reduced.

In an advantageous embodiment, the second housing comprises a movable protective plate at the rear, viewed in the intended direction of travel. By, for example, hydraulically moving this plate, in particular away from the pick-up/cutting device, any blockages can be removed in a simple manner. When the device is in use, the protective plate is in position in order to protect the driver, etc.

As such, harvesting machines are known, for example forage harvesters with a pick-up/cutting device, a discharge duct and a rotating accelerating element for discharging cut agricultural product through the discharge duct. Such a harvesting machine is, for example, described in EP-A1-1151654. However, in addition to the pick-up unit and the cutting unit, the pick-up/cutting device known therefrom contains a compacting unit consisting of several pairs of rollers located opposite one another for compacting the picked-up agricultural product, while the cutting unit is formed by a cylinder chopper. As a result of the addition of the compacting unit and the cylinder chopper, the cutting operation is carried out accurately. However, this has the drawback that it requires a lot of power to operate the pick-up/cutting device and that the working width is also relatively limited.

Using a relatively small engine power (150 - 200 hp), the agricultural vehicle according to the invention can achieve a working width which is approximately 1.5 to 2 times larger than with the known harvesting machines and yet is able to discharge (i.e. eject) the cut agricultural product from the agricultural vehicle in a reliable manner.

In one embodiment of an agricultural vehicle according to the invention, a collecting container is provided between the outlet of the conveying duct and the discharge duct for collecting the cut agricultural product, which collecting container is provided with means for conveying the cut agricultural product to the rotating accelerating element. In this manner, a certain buffer stock can be stored in the agricultural vehicle itself, so that it is not always necessary for an additional vehicle with a container to be next to the agricultural vehicle according to the invention in order to collect cut agricultural product. The means for conveying agricultural product to the accelerating element may consist of means which are known per se, such as augers, conveyor belts and the like.

In order to be able to discharge cut agricultural product correctly for each kind of agricultural product, one embodiment of an agricultural vehicle according to the invention is characterized by the fact that two rotating accelerating elements are arranged on top of one another in the discharge duct for conveying the cut agricultural product through the discharge duct by means of contact with the cut agricultural product.

One exemplary embodiment of a crop-processing device according to the invention will be described below by way of example with reference to the drawing, in which:
Figure 1 shows a diagrammatic side view in partial cross section of a device according to the invention,
Figure 2 shows a partially cut-away front view of the device according to Figure 1, and
Figure 3 shows a diagrammatic side view of another device according to the invention.

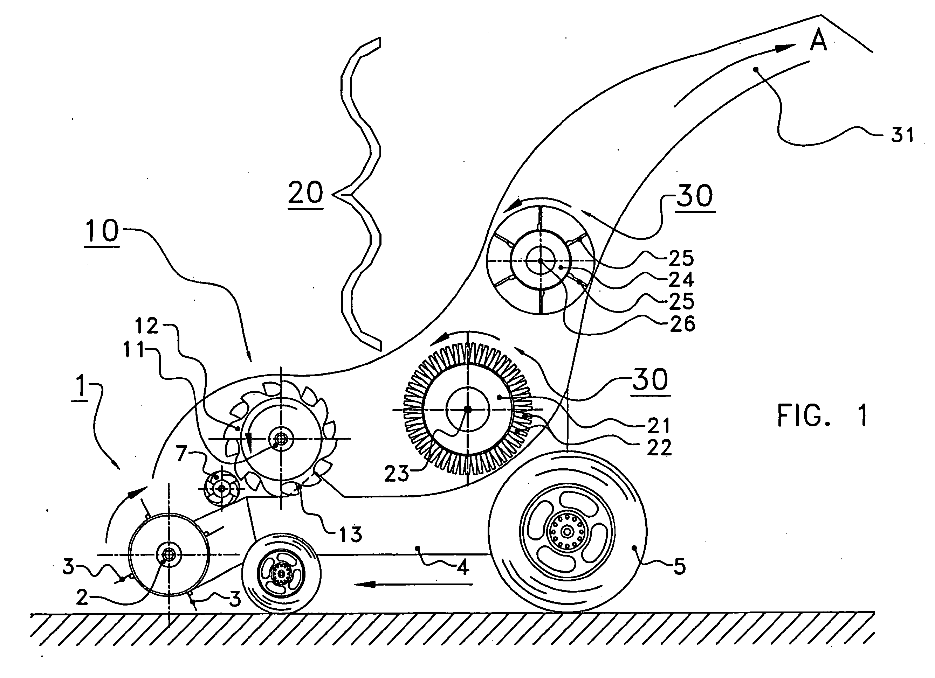

Figure 1 shows a diagrammatic side view in partial cross section of a device according to the invention. The device comprises a pick-up device 1 on a frame 4 with wheels 5, a cutting device 10 and a discharge device which is denoted overall by reference numeral 20.

The pick-up device comprises a rotating body 2 having teeth 3. The cutting device 10 comprises a rotating body 11 having several teeth or carriers 12, as well as one or more fixed knives 13.

The discharge device 20 comprises a first accelerating element 21 with projections 22, which rotates about a first shaft 23, as well as a second accelerating element 24 with projections 25, which rotates about a second shaft 26. Furthermore, a discharge duct 30 with an outlet opening 31 is provided.

The various rotating components rotate in the directions as indicated by the respective arrows, with the product to be discharged being discharged in the direction of arrow A. Obviously, it is also possible to reverse the direction of rotation, but in this case the discharge direction A remains unchanged.

In operation, the pick-up device 1 known per se picks up the crop to be processed, such as cut stalks or hay, from the ground. This product is fed to the cutting device 10 which is also known per se. There, the product is carried along by the rotating teeth or carriers 12, of which at least the ends can move between fixed knives 13, where the product is cut due to the interaction between the teeth or carriers 12 and the knives 13. Advantageously, at least some of the teeth or carriers 12 and/or knives 13 are resiliently mounted.

Subsequently, the cut product is fed to and gripped by the projections 22 of the first accelerating element 21. The speed of the product at the cutting device 10 is virtually equal to the peripheral speed of the teeth or carriers 12, and this is usually approximately equal to the speed of travel, generally around 5 m/s. The peripheral speed of the first accelerating element 21 is, for example 8 or 10 m/s. The projections 22 are in this case shown as some kind of teeth, made of for example plastic, arranged in one or a few spirals with a total outer diameter of, for example, 500 mm, and with a density of 100 teeth per metre. The dimensions of the teeth are, for example, 15 cm high (in the direction perpendicular to the first shaft 23), 5 mm wide (measured in the direction parallel to the first shaft 23) and narrowing to the top to a "depth" of 4 cm.

The product which has been accelerated in this way is fed to and gripped by the second accelerating element 24. This has projections 25 in the form of vanes with a total outer diameter of, for example, 600 mm, which accelerate the product by means of a kind of nudge until it approximately reaches the peripheral speed of accelerating element 24, in this case for example 25 m/s. The product is then discharged through discharge duct 30, in the direction of outlet opening 31, via which it can be loaded onto, for example, a lorry.

A buffer store between the cutting device 10 and the discharge device 20 is not shown. This buffer store may comprise a buffer space in which cut product from the cutting device 10 ends up, as well as feeding means, such as an auger or conveyor belt, for feeding the product to the discharge device 20. These feeding means can be, for example, controlled and can, in particular, be temporarily switched off, as a result of which discharge from the opening 31 can reliably be stopped temporarily, for example when another lorry has to be driven under the opening 31.

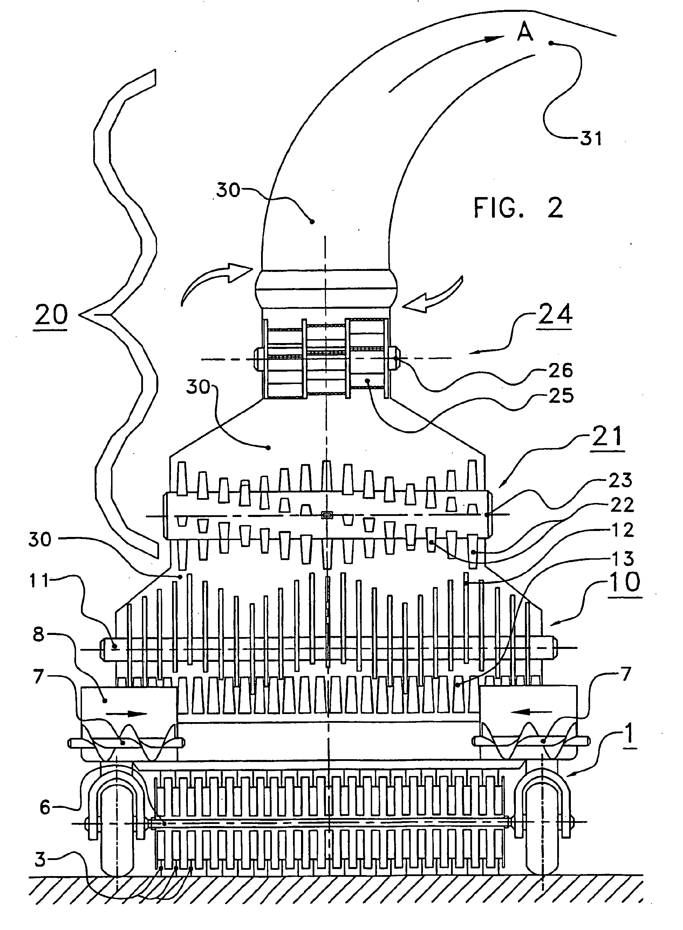

Figure 2 shows a partially cut-away front view of the device according to Figure 1. Incidentally, this drawing is not to scale either, and also diagrammatic. Incidentally, identical components are always denoted by the same reference numerals.

The pick-up device 1 comprises teeth 3 which are passed through holes 6. The supply of picked-up product to the cutting device 10 is narrowed by means of lateral augers 7 and guide panels 8.

The cutting device comprises a series of parallel fixed (counter)knives 13, as well as a roller 11, likewise having a series of parallel knives 12, which can move between knives 13. Incidentally, in this context, the expression "fixed" should be interpreted as having a fixed rest position. The knives 13 can indeed be resiliently mounted.

Downstream of the cutting device 10, the cut product is fed to discharge duct 30, which in this case, but not necessarily, is narrower than the width of the cutting device 10. Inside the discharge duct 30, the first accelerating element 21 is arranged with a body or first shaft 23 having projections 22, which grip and accelerate the product, and subsequently discharge it in the direction of the second accelerating element 24, with a body or second shaft 26 having vanes 25. The second accelerating element 24 then transports the product away via the duct 30 and the outlet opening 31 to the outside. As described above, the speed of the product has increased in a stepwise manner. The width of the discharge duct 30 has decreased in stages, which is advantageous, but not compulsory.

None of the figures show the drive mechanism of the various rotating components, but it is believed that it should be easy for a person skilled in the art to fill in the details. In addition, in many cases details which are known per se and possibly advantageous have not been shown, such as an adjustable discharge duct.

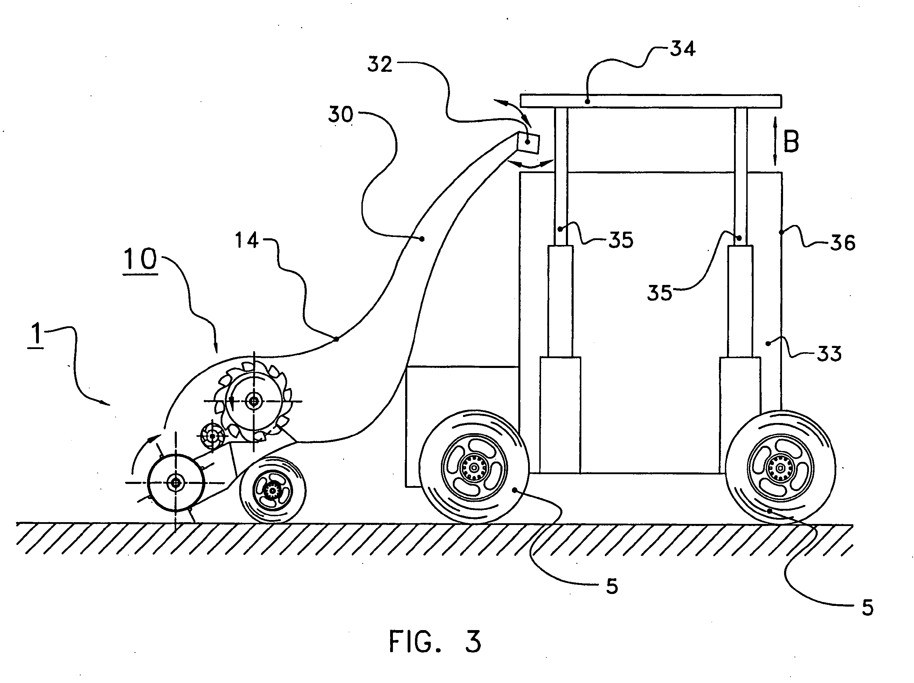

Figure 3 shows a diagrammatic side view of another device according to the invention.

In this case, 1 and 10 denote a pick-up and cutting unit, respectively, which are not shown in any more detail.

A discharge duct 30 is provided with an angle-adjusting means 32, which can be moved in the directions of the arrows. Furthermore, reference numeral 33 denotes a collecting tray with a roof 34 which can be moved by means of hydraulic cylinders 35.

Using the angle-adjusting means 32, for example a plate or tube which can be moved by a motor, a product stream can be directed from the discharge opening to the collecting tray 33. As a result, the collecting tray can be filled in an optimum manner, both with regard to the product properties, such as a very even filling, and the absolute load, since any angle can be used.

In addition, in order to be able to further increase the maximum total load, a hydraulic roof 34 with cylinders 35 is provided. By retracting the cylinders in the direction of arrow B, the roof can compress the product. Of course, it is advantageous in this case that the device can be filled very homogeneously with the aid of means 32, so that the properties of the product remain homogeneous, even after compression, and the hydraulic roof is not subjected to excessive loads locally.

Alternatively or in addition, it is also possible to design one or more side walls 36 so that they can be moved hydraulically. For one thing, the product can also be compressed in this way. In addition, if one side wall pushes and an opposite side is removable, liftable or the like, the product can be pushed out of the collecting tray 33 in a simple manner.

Furthermore, it can be seen that a housing 14 is provided surrounding the pick-up device 1 and the cutting device 10, which housing continues around the discharge device (not shown separately here). For the sake of simplicity, the housing 14 in this case is one uninterrupted housing. In practice, one or more flaps, covers and the like will be provided, for example for maintenance and the like. In that case, it is also advisable to ensure that such components of the housing 14, which can also comprises several housings, fit as tightly as possible, as fresh air might be sucked in through gaps and cause ejection.

A protective covering panel (not shown) is provided on the rear of the pick-up device 1 and/or the cutting device 10, which can for example be folded down hydraulically, in order to clear blockages or the like.

The illustrated embodiments are not intended to be limiting in any way and solely described by way of example. Rather, the scope of protection is determined by the appended claims.

## Claims

1. Crop-processing device provided with a pick-up/cutting device (1, 10) for picking up and cutting an agricultural product, as well as a discharge device for discharging the picked-up and cut agricultural product,
in which the pick-up/cutting device (1, 10) is provided with a pick-up unit (1) for picking up the agricultural product and with a cutting unit (10) for cutting the picked-up agricultural product,
in which the discharge device comprises a discharge duct (30) for discharging the cut agricultural product in a discharge direction, with a first rotating accelerating element (21) and a second rotating accelerating element (24), placed behind the first accelerating element viewed in the discharge direction, in the discharge duct (30), for conveying the cut agricultural product through the discharge duct (30) by means of contact with the cut agricultural product,
**characterized in that** a peripheral speed of the second accelerating element (24) is greater than a peripheral speed of the first accelerating element (21).

2. Crop-processing device according to Claim 1, in which the peripheral speed of the first accelerating element (21) is between 5 and 25 m/s.

3. Crop-processing device according to one of the preceding claims, in which the peripheral speed of the second accelerating element (24) is between 10 and 50 m/s.

4. Crop-processing device according to one of the preceding claims, in which the diameter of the first accelerating element (21) is at least 400 mm, preferably at least 450 mm.

5. Crop-processing device according to one of the preceding claims, in which the diameter of the second accelerating element (24) is between 400 and 800 mm, preferably between 450 and 700 mm.

6. Crop-processing device according to one of the preceding claims, in which the first (21) and the second accelerating element (24) are rotatable about respective parallel shafts.

7. Crop-processing device according to Claim 6, in which the respective shafts are at right angles to an intended advancement direction of the crop-processing device.

8. Crop-processing device according to one of the preceding claims, in which the discharge duct (30) is narrower at the second accelerating element (24) than at the first accelerating element (21).

9. Crop-processing device according to one of the preceding claims, in which at least the first (21) and the second accelerating element (24) each comprise a cylindrical body (23, 26) with projections (22, 25).

10. Crop-processing device according to Claim 9, in which the projections (22, 25) are at least 2 cm, preferably at least 5 cm long.

11. Crop-processing device according to one of Claims 9 or 10, in which the projections (25) of the second accelerating element (24) have a larger mean width than the mean width of the projections (22) of the first accelerating element (21).

12. Crop-processing device according to one of Claims 9-11, in which the width of the projections (22) of the first accelerating element (21) is between 2 and 30 mm.

13. Crop-processing device according to one of Claims 9-12, in which the width of the projections (25) of the second accelerating element (24) is between 100 and 400 mm, preferably between 250 and 300 mm.

14. Crop-processing device according to one of Claims 9-13, in which neighbouring projections (22) are arranged on the first accelerating element (21), staggered in the peripheral direction, advantageously in at least one spiral.

15. Crop-processing device according to Claim14, in which at least 80 projections (22) per metre are arranged over the width of the first accelerating element (21), advantageously at least 80 projections per metre over the width of each spiral.

16. Crop-processing device according to one of the preceding claims, comprising an engine with a maximum engine power of less than 150 kW, more particularly less than 125 kW.

17. Crop-processing device according to one of the preceding claims, in which an angle of contact between the cut agricultural product and the first accelerating element (21) is between 45 and 100°, preferably between 60 and 90°.

18. Crop-processing device according to one of the preceding claims, in which an angle of contact between the cut agricultural product and the second accelerating element (24) is between 5 and 45°, preferably between 5 and 30°.

19. Crop-processing device according to one of the preceding claims, in which the contact between the cut agricultural product and the second accelerating element (24) is substantially tangential.

20. Crop-processing device according to one of Claims 1-17, in which an angle of contact between the cut agricultural product and the first accelerating element (21), and an angle of contact between the cut agricultural product and the second accelerating element (24) are substantially equal and preferably approximately 30°.

21. Crop-processing device according to one of the preceding claims, in which the cutting device (1, 10) comprises at least one fixed knife (13) and at least one, in particular rotating, tooth or carrier (12) which is movable with respect to the at least one fixed knife (13).

22. Crop-processing device according to one of the preceding claims, in which the pick-up/cutting device (1, 10) is only provided with the pick-up unit (1) and the cutting unit (10).

23. Crop-processing device according to one of the preceding claims, in which the agricultural product comprises elongate stalks, in particular grass or hay.

24. Crop-processing device according to one of the preceding claims, in which a collecting container is provided between the cutting device (10) and the discharge device (20) for collecting the cut agricultural product, which collecting container is provided with means for conveying the cut agricultural product to the discharge device (20).

25. Crop-processing device according to one of the preceding claims, in which the discharge duct (30) is curved, and at least the surface of the internal walls of at least the curved parts of the discharge duct (30) has a low coefficient of friction in order to assist conveyance of the cut agricultural product through the discharge duct (30).

26. Crop-processing device according to one of the preceding claims, in which the discharge duct (30) comprises angle-adjustment means for adjusting the discharge angle of the product.

27. Crop-processing device according to one of the preceding claims, comprising a collecting tray, which is designed for collecting product delivered out of the discharge duct.

28. Crop-processing device according to Claim 27, comprising product-compressing means which are designed for compressing the product that is in the collecting tray.

29. Crop-processing device according to Claim 28, in which the product-compressing means comprise a displaceable wall, advantageously a hydraulic roof or a hydraulic side wall of the collecting tray.

## Patentansprüche

1. Gutaufbereitungsvorrichtung mit Aufnahme-/Schneidegerät (1, 10) zum Aufnehmen und Schneiden eines landwirtschaftlichen Produkts als auch mit einer Abführeinrichtung zum Abführen des aufgenommenen und geschnittenen landwirtschaftlichen Produkts,
in welcher das Aufnahme-/Schneidegerät (1, 10) mit einer Aufnahmeeinheit (1) zum Aufnehmen des landwirtschaftlichen Produkts und mit einer Schneideeinheit (10) zum Schneiden des aufgenommenen landwirtschaftlichen Produkts ausgestattet ist,
in welcher die Abführeinrichtung einen Abführkanal (30) zum Abführen des geschnittenen landwirtschaftlichen Produkts in eine Abführrichtung mit einem ersten rotierenden Beschleunigungselement (21) umfasst, und mit einem zweiten rotierenden Beschleunigungselement (24), das in Abführrichtung gesehen hinter dem ersten Beschleunigungselement im Abführkanal (30) angeordnet ist, zum Befördern des geschnittenen landwirtschaftlichen Produkts durch den Abführkanal (30) mittels Kontakt mit dem geschnittenen landwirtschaftlichen Produkt,
**dadurch gekennzeichnet, dass** eine Umfangsgeschwindigkeit des zweiten Beschleunigungselements (24) größer ist als eine Umfangsgeschwindigkeit des ersten Beschleunigungselements (21).

2. Gutaufbereitungsvorrichtung nach Anspruch 1,
in welcher die Umfangsgeschwindigkeit des ersten Beschleunigungselements (21) zwischen 5 und 25 m/s liegt.

3. Gutaufbereitungsvorrichtung nach einem der vorhergehenden Ansprüche,
in welcher die Umfangsgeschwindigkeit des zweiten Beschleunigungselements (24) zwischen 10 und 50 m/s liegt.

4. Gutaufbereitungsvorrichtung nach einem der vorhergehenden Ansprüche,
in welcher der Durchmesser des ersten Beschleunigungselements (21) mindestens 400 mm, vorzugsweise mindestens 450 mm, beträgt.

5. Gutaufbereitungsvorrichtung nach einem der vorhergehenden Ansprüche,
in welcher der Durchmesser des zweiten Beschleunigungselements (24) zwischen 400 und 800 mm, vorzugsweise zwischen 450 und 700 mm, beträgt.

6. Gutaufbereitungsvorrichtung nach einem der vorhergehenden Ansprüche,
in welcher das erste (21) und das zweite Beschleunigungselement (24) um jeweilige parallele Achsen drehbar sind.

7. Gutaufbereitungsvorrichtung nach Anspruch 6,
in welcher die jeweiligen Achsen in rechten Winkeln zu einer vorgesehenen Förderrichtung der Gutaufbereitungsvorrichtung liegen.

8. Gutaufbereitungsvorrichtung nach einem der vorhergehenden Ansprüche,
in welcher der Abführkanal (30) am zweiten Beschleunigungselement (24) enger ist als am ersten Beschleunigungselement (21).

9. Gutaufbereitungsvorrichtung nach einem der vorhergehenden Ansprüche,
in welcher zumindest das erste (21) und das zweite Beschleunigungselement (24) jeweils einen zylindrischen Körper (23, 26) mit Vorsprüngen (22, 25) umfassen.

10. Gutaufbereitungsvorrichtung nach Anspruch 9,
in welcher die Vorsprünge (22, 25) mindestens 2 cm, vorzugsweise mindestens 5 cm lang sind.

11. Gutaufbereitungsvorrichtung nach einem der Ansprüche 9 oder 10,
in welcher die Vorsprünge (25) des zweiten Beschleunigungselements (24) eine größere mittlere Breite aufweisen, als die mittlere Breite der Vorsprünge (22) des ersten Beschleunigungselements (21) beträgt.

12. Gutaufbereitungsvorrichtung nach einem der Ansprüche 9 bis 11,
in welcher die Breite der Vorsprünge (22) des ersten Beschleunigungselements (21) zwischen 2 und 30 mm beträgt.

13. Gutaufbereitungsvorrichtung nach einem der Ansprüche 9 bis 12,
in welcher die Breite der Vorsprünge (25) des zweiten Beschleunigungselements (24) zwischen 100 und 400 mm, vorzugsweise zwischen 250 und 300 mm, beträgt.

14. Gutaufbereitungsvorrichtung nach einem der Ansprüche 9 bis 13,
in welcher benachbarte Vorsprünge (22) auf dem ersten Beschleunigungselement (21) in der Umfangsrichtung gestaffelt angeordnet sind, vorzugsweise in mindestens einer Spirale.

15. Gutaufbereitungsvorrichtung nach Anspruch 14,
in welcher mindestens 80 Vorsprünge (22) pro Meter über die Breite des ersten Beschleunigungselements (21), vorteilhafterweise mindestens 80 Vorsprünge pro Meter über die Breite jeder Spirale, angeordnet sind.

16. Gutaufbereitungsvorrichtung nach einem der vorhergehenden Ansprüche,
umfassend einen Motor mit einer maximalen Motorleistung von weniger als 150 kW, insbesondere weniger als 125 kW.

17. Gutaufbereitungsvorrichtung nach einem der vorhergehenden Ansprüche,
in welcher ein Kontaktwinkel zwischen dem geschnittenen landwirtschaftlichen Produkt und dem ersten Beschleunigungselement (21) zwischen und 45 und 100°, vorzugsweise zwischen 60 und 90°, beträgt.

18. Gutaufbereitungsvorrichtung nach einem der vorhergehenden Ansprüche,
in welcher ein Kontaktwinkel zwischen dem geschnittenen landwirtschaftlichen Produkt und dem zweiten Beschleunigungselement (24) zwischen und 5 und 45°, vorzugsweise zwischen 5 und 30°, beträgt.

19. Gutaufbereitungsvorrichtung nach einem der vorhergehenden Ansprüche,
in welcher der Kontakt zwischen dem geschnittenen landwirtschaftlichen Produkt und dem zweiten Beschleunigungselement (24) im Wesentlichen tangential erfolgt.

20. Gutaufbereitungsvorrichtung nach einem der Ansprüche 1 bis 17,
in welcher ein Kontaktwinkel zwischen dem geschnittenen landwirtschaftlichen Produkt und dem ersten Beschleunigungselement (21) und ein Kontaktwinkel zwischen dem geschnittenen landwirtschaftlichen Produkt und dem zweiten Beschleunigungselement (24) im Wesentlichen gleich sind und vorzugsweise ungefähr 30° beträgt.

21. Gutaufbereitungsvorrichtung nach einem der vorhergehenden Ansprüche,
in welcher das Schneidgerät (1, 10) wenigstens ein feststehendes Messer (13) und wenigstens einen, im Besonderen rotierenden, Zahn oder Träger (12) umfasst, der beweglich in Bezug auf das wenigstens eine feststehende Messer (13) ist.

22. Gutaufbereitungsvorrichtung nach einem der vorhergehenden Ansprüche,
in welcher das Aufnahme-/Schneidgerät (1, 10) nur mit der Aufnahmeeinheit (1) und der Schneideinheit (10) ausgestattet ist.

23. Gutaufbereitungsvorrichtung nach einem der vorhergehenden Ansprüche,
in welcher das landwirtschaftliche Produkt längliche Halme umfasst, insbesondere Gras oder Heu.

24. Gutaufbereitungsvorrichtung nach einem der vorhergehenden Ansprüche,
in welcher ein Sammelbehälter zwischen dem Schneidgerät (10) und der Abführeinrichtung (20) zum Sammeln des geschnittenen landwirtschaftlichen Produkts vorgesehen ist, wobei der Sammelbehälter mit Mitteln zum Fördern des geschnittenen landwirtschaftlichen Produkts zur Abführeinrichtung (20) hin ausgestattet ist.

25. Gutaufbereitungsvorrichtung nach einem der vorhergehenden Ansprüche,
in welcher der Abführkanal (30) gekrümmt ist und zumindest die Oberfläche der inneren Wände mindestens der gekrümmten Teile des Abführkanals (30) einen niedrigen Reibungskoeffizienten aufweist, um die Förderung des geschnittenen landwirtschaftlichen Produkts durch den Abführkanal (30) zu unterstützen.

26. Gutaufbereitungsvorrichtung nach einem der vorhergehenden Ansprüche,
in welcher der Abführkanal (30) Winkeleinstellungsmittel zum Einstellen des Abführwinkels des Produkts umfasst.

27. Gutaufbereitungsvorrichtung nach einem der vorhergehenden Ansprüche,
umfassend einen Auffangbehälter, welcher zum Auffangen von aus dem Abführkanal ausgegebenem Produkt konstruiert ist.

28. Gutaufbereitungsvorrichtung nach Anspruch 27,
umfassend Produktverdichtungsmittel, welche zum Verdichten des Produkts, das sich in dem Auffangbehälter befindet, konstruiert sind.

29. Gutaufbereitungsvorrichtung nach Anspruch 28,
in welcher die Produktverdichtungsmittel eine verschiebbare Wand, vorzugsweise ein hydraulisches Dach oder eine hydraulische Seitenwand des Auffangbehälters, umfassen.

## Revendications

1. Dispositif de traitement de récoltes comportant un dispositif de ramassage/coupe (1, 10) pour ramasser et couper un produit agricole, ainsi qu'un dispositif d'évacuation pour évacuer le produit agricole ramassé et coupé,
dans lequel le dispositif de ramassage/coupe (1, 10) comporte une unité de ramassage (1) pour ramasser le produit agricole et une unité de coupe (10) pour couper le produit agricole ramassé,
dans lequel le dispositif d'évacuation comprend un conduit d'évacuation (30) pour évacuer le produit agricole coupé dans une direction d'évacuation, avec un premier élément d'accélération rotatif (21) et un second élément d'accélération rotatif (24), placé derrière le premier élément d'accélération vu dans la direction d'évacuation, dans le conduit d'évacuation (30), pour transporter le produit agricole coupé à travers le conduit d'évacuation (30) par contact avec le produit agricole coupé,
**caractérisé en ce qu'**une vitesse périphérique du second élément d'accélération (24) est supérieure à une vitesse périphérique du premier élément d'accélération (21).

2. Dispositif de traitement de récoltes selon la revendication 1, dans lequel la vitesse périphérique du premier élément d'accélération (21) est entre 5 et 25 m/s.

3. Dispositif de traitement de récoltes selon l'une quelconque des revendications précédentes, dans lequel la vitesse périphérique du second élément d'accélération (24) est entre 10 et 50 m/s.

4. Dispositif de traitement de récoltes selon l'une quelconque des revendications précédentes, dans lequel le diamètre du premier élément d'accélération (21) est d'au moins 400 mm, de préférence d'au moins 450 mm.

5. Dispositif de traitement de récoltes selon l'une quelconque des revendications précédentes, dans lequel le diamètre du second élément d'accélération (24) est entre 400 et 800 mm, de préférence entre 450 et 700 mm.

6. Dispositif de traitement de récoltes selon l'une quelconque des revendications précédentes, dans lequel le premier (21) et le second (24) éléments d'accélération sont rotatifs autour d'axes parallèles respectifs.

7. Dispositif de traitement de récoltes selon la revendication 6, dans lequel les axes respectifs sont à angle droit avec une direction d'avancement désirée du dispositif de traitement des récoltes.

8. Dispositif de traitement de récoltes selon l'une quelconque des revendications précédentes, dans lequel le conduit d'évacuation (30) est plus étroit au second élément d'accélération (24) qu'au premier élément d'accélération (21).

9. Dispositif de traitement de récoltes selon l'une quelconque des revendications précédentes, dans lequel au moins le premier (21) et le second (24) éléments d'accélération comprennent chacun un corps cylindrique (23, 26) avec des saillies (22, 25).

10. Dispositif de traitement de récoltes selon la revendication 9, dans lequel les saillies (22, 25) sont longues d'au moins 2 cm, de préférence au moins 5 cm.

11. Dispositif de traitement de récoltes selon l'une des revendications 9 ou 10, dans lequel les saillies (25) du second élément d'accélération (24) ont une largeur moyenne supérieure à la largeur moyenne des saillies (22) du premier élément d'accélération (21).

12. Dispositif de traitement de récoltes selon l'une quelconque des revendications 9 à 11, dans lequel la largeur des saillies (22) du premier élément d'accélération (21) est entre 2 et 30 mm.

13. Dispositif de traitement de récoltes selon l'une quelconque des revendications 9 à 12, dans lequel la largeur des saillies (25) du second élément d'accélération (24) est entre 100 et 400 mm, de préférence entre 250 et 300 mm.

14. Dispositif de traitement de récoltes selon l'une quelconque des revendications 9 à 13, dans lequel les saillies (22) voisines sont disposées sur le premier élément d'accélération (21), étalées dans la direction périphérique, avantageusement dans au moins une spirale.

15. Dispositif de traitement de récoltes selon la revendication 14, dans lequel au moins 80 saillies (22) par mètre sont disposées sur la largeur du premier élément d'accélération (21), avantageusement au moins 80 saillies par mètre sur la largeur de chaque spirale.

16. Dispositif de traitement de récoltes selon l'une quelconque des revendications précédentes, comprenant un moteur avec une puissance maximale du moteur inférieure à 150 kW, plus particulièrement inférieure à 125 kW.

17. Dispositif de traitement de récoltes selon l'une quelconque des revendications précédentes, dans lequel un angle de contact entre le produit agricole coupé et le premier élément d'accélération (21) est entre 45° et 100°, de préférence entre 60° et 90°.

18. Dispositif de traitement de récoltes selon l'une quelconque des revendications précédentes, dans lequel un angle de contact entre le produit agricole coupé et le second élément d'accélération (24) est entre 5° et 45°, de préférence entre 5° et 30°.

19. Dispositif de traitement de récoltes selon l'une quelconque des revendications précédentes, dans lequel le contact entre le produit agricole coupé et le second élément d'accélération (24) est sensiblement tangentiel.

20. Dispositif de traitement de récoltes selon l'une quelconque des revendications 1 à 17, dans lequel un angle de contact entre le produit agricole coupé et le premier élément d'accélération (21), et un angle de contact entre le produit agricole coupé et le second élément d'accélération (24) sont sensiblement égaux et de préférence d'approximativement 30°.

21. Dispositif de traitement de récoltes selon l'une quelconque des revendications précédentes, dans lequel le dispositif de coupe (1, 10) comprend au moins un couteau fixe (13) et au moins une dent ou un support (12), en particulier rotatif, mobile par rapport audit au moins un couteau fixe (13).

22. Dispositif de traitement de récoltes selon l'une quelconque des revendications précédentes, dans lequel le dispositif de ramassage/coupe (1, 10) comporte seulement l'unité de ramassage (1) et l'unité de coupe (10).

23. Dispositif de traitement de récoltes selon l'une quelconque des revendications précédentes, dans lequel le produit agricole comprend des tiges allongées, en particulier de l'herbe ou du foin.

24. Dispositif de traitement de récoltes selon l'une quelconque des revendications précédentes, dans lequel un récipient de collecte est disposé entre le dispositif de coupe (10) et le dispositif d'évacuation (20) pour collecter le produit agricole coupé, ledit récipient de collecte comportant un moyen pour transporter le produit agricole coupé jusqu'au dispositif d'évacuation (20).

25. Dispositif de traitement de récoltes selon l'une quelconque des revendications précédentes, dans lequel le conduit d'évacuation (30) est incurvé, et au moins la surface des parois intérieures d'au moins les parties incurvées du conduit d'évacuation (30) a un coefficient de frottement réduit afin d'aider au transport du produit agricole coupé à travers le conduit d'évacuation (30).

26. Dispositif de traitement de récoltes selon l'une quelconque des revendications précédentes, dans lequel le conduit d'évacuation (30) comprend un moyen d'ajustement de l'angle pour ajuster l'angle d'évacuation du produit.

27. Dispositif de traitement de récoltes selon l'une quelconque des revendications précédentes, comprenant un plateau de collecte, conçu pour collecter le produit sortant du conduit d'évacuation.

28. Dispositif de traitement de récoltes selon la revendication 27, comprenant des moyens de compression de produit conçus pour compresser le produit se trouvant dans le plateau de collecte.

29. Dispositif de traitement de récoltes selon la revendication 28, dans lequel les moyens de compression de produit comprennent une paroi déplaçable, avantageusement un toit hydraulique ou une paroi latérale hydraulique du plateau de collecte.
